(19) Europäisches Patentamt

European Patent Office

Office européen des brevets

(11) **EP 0 759 410 B1**

(12) **EUROPÄISCHE PATENTSCHRIFT**

(45) Veröffentlichungstag und Bekanntmachung des Hinweises auf die Patenterteilung:
**10.02.1999 Patentblatt 1999/06**

(51) Int. Cl.$^6$: **C01B 33/18**, C09D 7/12, C08K 3/36, H01L 23/29

(21) Anmeldenummer: **96111903.9**

(22) Anmeldetag: **24.07.1996**

(54) **Pyrogene Kieselsäure, Verfahren zu ihrer Herstellung und Verwendung**

Pyrogenic silica, process for its production and use thereof

Silice pyrogénique, son procédé de préparation et son utilisation

(84) Benannte Vertragsstaaten:
**BE DE FR GB IT**

(30) Priorität: **18.08.1995 DE 19530339**

(43) Veröffentlichungstag der Anmeldung:
**26.02.1997 Patentblatt 1997/09**

(73) Patentinhaber:
**Degussa Aktiengesellschaft**
**60311 Frankfurt (DE)**

(72) Erfinder:
- **Mangold, Helmut, Dr.**
  **63517 Rodenbach (DE)**
- **Kerner, Dieter, Dr.**
  **Midland Park, New Jersey 07432 (US)**
- **Kleinschmit, Peter, Prof.**
  **63457 Hanau (DE)**

(56) Entgegenhaltungen:
EP-A- 0 342 472    DE-A- 974 793
FR-A- 981 110    US-A- 5 340 560

## Beschreibung

Die Erfindung betrifft eine pyrogene Kieselsäure, das Verfahren zu ihrer Herstellung und deren Verwendung.

Unter der Bezeichnung pyrogene Kieselsäuren (englisch: fumed silica, pyrogenic silica) werden alle hochdispersen Kieselsäuren, die in der Gasphase bei hohen Temperaturen durch Koagulation von monomerer Kieselsäure erhalten werden, zusammengefaßt. Für die technische Herstellung der pyrogenen Kieselsäuren gibt es zwei Verfahren, die Hochtemperaturhydrolyse und das Lichtbogenverfahren.

Bei dem Prozeß der Hochtemperaturhydrolyse wird ein homogenes Gemisch aus dampfförmigem Siliciumtetrachlorid, Wasserstoff, Sauerstoff und einem Inertgas mit einem Brenner in einem gekühlten Verbrennungsraum verbrannt. Dabei laufen die folgenden Reaktionen nebeneinander ab:

$$2H_2 + O_2 \rightarrow 2H_2O$$

$$SiCl_4 + 2H_2O \rightarrow SiO_2 + 4HCl$$

Durch die Homogenität des Gasgemisches sind die Reaktionsbedingungen und damit die Entstehungs- und Wachstumsbedingungen für jedes $SiO_2$-Teilchen weitgehend gleich, so daß sich sehr einheitliche und gleichmäßige Teilchen bilden können (Winnacker-Küchler "Chemische Technologie", Band 2, Anorganische Technologie II, 4. Auflage, Seite 77 (1983)). Als Sauerstoffquelle wird bei dem bekannten Verfahren Luft verwendet. Die nach dem bekannten Verfahren hergestellten pyrogenen Kieselsäuren weisen spezifische Oberflächen zwischen 90 und 600 $m^2/g$ auf.

Die Herstellung von pyrogenen Kieselsäuren mit niedrigerer Oberfläche kann eine Verfahrensänderung in der Weise erfordern, daß der Sauerstoffgehalt der zur Reaktion eingesetzten Luft durch Zusatz von Sauerstoff erhöht werden muß. Hierdurch wird der Anteil an Ballastgas, wie zum Beispiel der Stickstoff der Luft, in den Verbrennungsgasen abgesenkt.

Dieses Verfahren hat den Nachteil, daß für die Versorgung mit zusätzlichem Sauerstoff zusätzliche Gasversorgungseinrichtungen, die besonderen Sicherheitsbestimmungen unterliegen, installiert werden müssen.

Dieses Verfahren hat weiterhin den Nachteil, daß niedrigoberflächige Kieselsäuren, die zusätzlich eine abgesenkte DBP-Zahl aufweisen, nicht hergestellt werden können.

Die Aufgabe der Erfindung besteht somit darin, eine niedrigoberflächige pyrogene Kieselsäure mit abgesenkter DBP-Zahl herzustellen, wobei man keinen zusätzlichen Sauerstoff einsetzen muß.

Gegenstand der Erfindung ist eine pyrogene Kieselsäure, welche dadurch gekennzeichnet ist, daß sie eine spezifische Oberfläche von weniger als 90 $m^2/g$, bevorzugt weniger als 60 $m^2/g$, und eine DBP-Absorption von weniger als 60 Gew.-% ($\triangleq$ 57,30 ml Dibutylphthalat / 100 g) aufweist.

Ein weiterer Gegenstand der Erfindung ist ein Verfahren zur Herstellung der pyrogenen Kieselsäure, welches dadurch gekennzeichnet ist, daß man Silikonhalogenide und/oder Organosilikonhalogenide verdampft, die Dämpfe mit einem Traggas vermischt, das Gemisch auf Temperaturen deutlich oberhalb des Siedepunktes der Silikonhalogenverbindung, jedoch unter der Zündtemperatur des Gemisches, vorzugsweise zwischen 200 und 400 °C, bei der Verwendung von $SiCl_4$ erhitzt, das so erhitzte Gemisch mit Wasserstoff mischt, die Gase in einer Flamme miteinander zur Reaktion bringt, anschließend die heißen Abgase und den entstandenen Feststoff abkühlt, die Abgase von dem Feststoff abtrennt und gegebenenfalls an dem Feststoff haftende Halogenidreste durch eine Wärmebehandlung mit befeuchteter Luft entfernt.

In einer bevorzugten Ausführungsform der Erfindung kann das Gemisch aus Luft und Silikonhalogenid nahe an die Endtemperatur von 450 °C vorgeheizt werden. Gleichzeitig kann man den Wasserstoff erst kurz vor dem Verlassen der Brennerdüse dem heißen Gemisch aus Luft und Silikonhalogenid zusetzen.

Als Brennervorrichtung kann ein Brenner, wie er in dem Dokument DE-A 974 793 beschrieben wird, eingesetzt werden.

Das erfindungsgemäße Verfahren hat den Vorteil, daß pyrogene Kieselsäuren, die neben der niedrigen Oberfläche auch niedrige DBP-Zahlen aufweisen, zugänglich sind.

Die erfindungsgemäße pyrogene Kieselsäure kann als Füllstoff in Silikonkautschuk und Kunststoffen, zur Einstellung der Rheologie von Farben und Lacken, als Träger für Katalysatoren, als hochreiner Rohstoff zur Herstellung von Quarz, als Material für electronic packaging, als Grundstoff zur Herstellung hochgefüllter feststoffhaltiger Dispersionen verwendet werden.

Die erfindungsgemäßen pyrogenen Kieselsäuren weisen die folgenden Vorteile auf:

Aufgrund der niedrigen BET-Oberfläche und der niedrigen DBP-Zahl können mit der erfindungsgemäßen pyrogenen Kieselsäure hochgefüllte Dispersionen in Wasser mit einem Feststoffgehalt von über 30 Gew.-% hergestellt werden. Diese Dispersionen können beispielsweise für CMP (chemical-mechanical-polishing) und beim Polieren von Siliciumscheiben in der Elektronikindustrie Anwendung finden.

**Beispiele**

Beispiel 1 (Vergleichsbeispiel)

3 l/h (= 4,449 kg/h) $SiCl_4$ werden verdampft und mit 7 $Nm^3$/h Luft sowie mit 2,5 $Nm^3$/h Wasserstoff in die Mischkammer eines Brenners bekannter Bauart überführt. Das Gasgemisch strömt mit einer Geschwindigkeit von ca. 28 m/sec (unter Betriebsbedingungen) aus der Düsenöffnung des Brenners (Brennermund) und brennt in die Reaktionskammer. In diese Reaktionskammer werden 10 $Nm^3$/h Sekundärluft (Raumtemperatur) zugegeben. Am Brennermund wird die Temperatur des Gasgemisches ($SiCl_4$-Luft-Wasserstoff) gemessen; sie beträgt 85 °C. In die den Brennermund umgebende Ringdüse werden 0,3 $Nm^3$/h Wasserstoff (Raumtemperatur) eingespeist. Danach werden die entstandene Kieselsäure und das Abgas in einem Kühlsystem auf ca. 100 bis 130 °C abgekühlt, und in einem Filter voneinander getrennt. Durch Behandlung mit befeuchteter Luft bei erhöhten Temperaturen werden noch anhaftende Salzsäurereste von der Kieselsäure entfernt. Die spezifische Oberfläche der erhaltenen pyrogenen Kieselsäure beträgt 110 $m^2$/g. Weitere analytische Daten sind in Tabelle 1 und weitere Daten zum Verfahren in Tabelle 2 angegeben.

Beispiel 2

Man verfährt wie in Beispiel 1 angegeben. Es werden jedoch 8,0 $Nm^3$/h Luft und 2,5 $Nm^3$/h Wasserstoff eingesetzt. Das Luft-$SiCl_4$-Gemisch wird durch einen auf 450 °C aufgeheizten Wärmetauscher geführt und dabei erwärmt. Der in die Mischkammer des Brenners eingeleitete Wasserstoff weist Raumtemperatur auf. Nach der Zumischung von Wasserstoff in die Mischkammer des Brenners wird eine Temperatur von 327 °C des $SiCl_4$-Luft-Wasserstoff-Gasgemisches am Brennermund gemessen. Das Gasgemisch strömt mit einer Geschwindigkeit von ca. 38 m/sec (unter Betriebsbedingungen) aus der Düsenöffnung des Brenners und brennt in die Reaktionskammer. In diese Reaktionskammer werden 10 $Nm^3$/h Sekundärluft, die zuvor auf ca. 150 °C erhitzt wurde, zugegeben. In die den Brennermund umgebende Ringdüse werden 1,00 $Nm^3$/h Wasserstoff (Raumtemperatur) eingespeist. Nach der Entsäuerung mittels befeuchteter Luft beträgt die spezifische Oberfläche der Kieselsäure 48 $m^2$/g. Weitere analytische Daten sind in Tabelle 1 und weitere Daten zum Verfahren in Tabelle 2 angegeben

Bei den in den Beispielen genannten Temperaturen werden keine Ansätze in den gasführenden Leitungen und im Inneren des Brenners beobachtet.

Tabelle 1

| Beispiel Nr. | 1 | 2 |
|---|---|---|
| BET [$m^2$/g] | 110 | 48 |
| pH [4%-Dispersion] DIN/ISO 787/IX | 4.32 | 4.44 |
| Schüttgewicht [g/l] | 18 | 68 |
| Stampfgewicht [g/l] | 22 | 92 |
| DBP-Absorption [Gew.-%] | 253 | 45 |

Tabelle 2

| Tabelle der experimentellen Bedingungen und daraus errechneter Flammenparameter bei der Herstellung von pyrogener niedrigoberflächiger Kieselsäure gemäß den Beispielen 1 bis 2 | | | | | | | | | | |
|---|---|---|---|---|---|---|---|---|---|---|
| Nr. | **Luft** | | $H_2$ Primär $[Nm^3/h]$ | $H_2$ Mantel $[Nm^3/h]$ | $SiCl_4$ $[l/h]$ | Belad Me-Dampf $[g/Nm^3]$ | Verhältnis | | Ström norm $[m/sec]$ | Ström Betrieb $[m/sec]$ |
| | Primär $[Nm^3/h]$ | Sekund $[Nm^3/h]$ | | | | | $H_2$ gamma $[-]$ | $O_2$ lambda $[-]$ | | |
| 1 | 7.00 | 10.00 | 2.50 | 0.30 | 3.0 | 440.3 | 2.16 | 1.17 | 21.1 | 27.7 |
| 2 | 8.00 | 10.00 | 2.50 | 1.00 | 3.0 | 400.5 | 2.16 | 1.34 | 17.4 | 38.3 |

Abkürzungen:
**Luft, Primär** = Primärluft gemischt mit $SiCl_4$-Dampf, **Sekund** = Sekundärluft; **Belad Me-Dampf** = Beladung des Luft-Gasgemisches an Metallhalogenid-Dampf $SiCl_4$; **Verhältnis $H_2$ gamma** = Verhältnis von eingespeistem Wasserstoff im Kern (Brenner) zu stöchiometrisch benötigtem Wasserstoff; **Verhältnis $O_2$ lambda** = Verhältnis von eingespeistem Sauerstoff (der Luft) im Brenner zu stöchiometrisch benötigtem Sauerstoff; **Ström norm** = auf Normbedingungen (273 K, 1 atm) bezogene Gasaustrittsgeschwindigkeit am Brennermund; **Ström Betrieb** = auf Betriebsbedingungen bezogene Austrittsgeschwindigkeit.

**Patentansprüche**

1. Pyrogene Kieselsäure, dadurch gekennzeichnet, daß sie eine spezifische Oberfläche von weniger als 90 $m^2/g$, bevorzugt weniger als 60 $m^2/g$ und eine DBP-Absorption von weniger als 60 Gew.-% ($\hat{=}$ 57,30 ml Dibutylphthalat/100 g)aufweist.

2. Verfahren zur Herstellung einer pyrogenen Kieselsäure, dadurch gekennzeichnet, daß man Silikonhalogenide und/oder Organosilikonhalogenide verdampft, die Dämpfe mit einem Traggas vermischt, das Gemisch auf Temperaturen deutlich oberhalb des Siedepunktes der Silikonhalogenverbindung, jedoch unter der Zündtemperatur des Gemisches, vorzugsweise zwischen 200 und 400 °C erhitzt, das so erhitzte Gemisch mit Wasserstoff mischt, die Gase in einer Flamme miteinander zur Reaktion bringt, anschließend die heißen Abgase und den entstandenen Feststoff abkühlt, die Abgase von dem Feststoff abtrennt und gegebenenfalls an dem Feststoff haftende Halogenidreste durch eine Wärmebehandlung mit befeuchteter Luft entfernt.

3. Verwendung der pyrogenen Kieselsäure nach Anspruch 1 als Füllstoff in Kautschuk, Silikonkautschuk und Kunststoffen, zur Einstellung der Rheologie in Farben und Lacken, als Träger für Katalysatoren, als hochreiner Rohstoff zur Herstellung von Quarz, als electronic packaging Material, als Grundstoff zur Herstellung hochgefüllter feststoffhaltiger Dispersionen.

**Claims**

1. Pyrogenic silica, characterised in that it has a specific surface of less than 90 $m^2/g$, preferably of less than 60 $m^2/g$, and a DBP absorption of less than 60 wt.% ($\hat{=}$ 57.30 ml dibutyl phthalate/100 g).

2. Process for the production of a pyrogenic silica, characterised in that silicium halides and/or organosilicium halides are vaporised, the vapours are mixed with a carrier gas, the mixture is heated to temperatures definitely above the boiling point of the silicium halide compound , but below the ignition temperature of the mixture, preferably between 200°C and 400°C, the mixture thus heated is mixed with hydrogen, the gases are reacted with one another in a flame, the heated waste gases and the solid substance formed are then cooled, the waste gases are separated from the solid substance and remains of halide possibly adhering to the solid substance are removed by a heat treatment with humidified air.

3. Use of the pyrogenic silica according to claim 1 as filler in rubber, silicone rubber and plastics, for adjusting the rheology in paints and varnishes, as supports for catalysts, as high-purity raw material for the production of quartz, as electronic packaging material, as raw material for the production of highly filled dispersions containing solids.

**Revendications**

1. Acide silicique pyrogénique, caractérisé en ce qu'il une surface spécifique inférieure à 90 m$^3$/g, de préférence inférieure à 60 m$^2$/g, et une absorption DBP inférieure à 60% en poids (+/- 57,30 ml de phtalate de dibutyle par 100 g).

2. Procédé de production d'un acide silicique pyrogénique, caractérisé en ce qu'on vaporise des halogénures de silicium et/ou des halogénures d'organosilicium, on mélange les vapeurs à un gaz véhiculaire, on chauffe le mélange à des températures nettement supérieures au point d'ébullition du composé halogéné de silicium, mais inférieures au point d'inflammation du mélange, de préférence entre 200 et 400°C, on mélange le mélange ainsi obtenu à de l'hydrogène, on fait réagir les gaz mutuellement avec une flamme, on refroidit ensuite les gaz brûlés chauds et le solide obtenu, on sépare les gaz brûlés du solide et on élimine éventuellement les résidus d'halogénure adhérant au solide par un traitement thermique avec de l'air humidifié.

3. Utilisation de l'acide silicique pyrogénique selon la revendication 1 comme charge dans le caoutchouc, le caoutchouc de silicone et les matières plastiques pour régler la rhéologie dans des colorants et des vernis, comme support catalytique, comme matière première très pure pour la fabrication de quartz, comme matériau d'emballage électronique, comme base pour la fabrication de dispersions de solides hautement chargées.